# EUROPEAN PATENT APPLICATION

(11) **EP 4 447 253 A1**
(43) Date of publication of application: **16.10.2024**
(21) Application number: 22913765.8
(22) Date of filing: 31.10.2022
(51) Int. Cl.: H02J 7/00, H02J 15/00, H02H 7/18, H02J 3/32

(54) **ENERGY STORAGE SYSTEM AND CONTROL METHOD FOR ENERGY STORAGE SYSTEM**

(30) Priority: 30.12.2021 CN 202111651813
(71) Applicant: Huawei Digital Power Technologies Co., Ltd., Shenzhen, Guangdong 518043 (CN)
(72) Inventor: WU, Zhipeng, Shenzhen, Guangdong 518043 (CN); CHEN, Zimin, Shenzhen, Guangdong 518043 (CN); WANG, Zhigang, Shenzhen, Guangdong 518043 (CN)
(74) Representative: Epping - Hermann - Fischer
(86) International application number: PCT/CN2022/128712
(87) International publication number: WO 2023/124502

(57) **Abstract**

An energy storage system and an energy storage system control method are provided, to isolate a fault source, avoid expansion of a fault range, and improve safety of the energy storage system. The energy storage system includes at least one battery rack and a controller. Each battery rack includes a direct current/direct current converter and a plurality of battery units. The plurality of battery units are connected in series to the direct current/direct current converter, so that the battery rack can obtain charging power or output discharging power by using the direct current/direct current converter. Each battery unit includes a cell and an optimizer, and the optimizer of each battery unit is configured to perform bypass or series connection control on the cell in the same battery unit. The controller is connected to each battery unit, and the controller is configured to: when detecting that a fault occurs in a battery unit, control an optimizer of the faulty battery unit to bypass a cell in the faulty battery unit.

## Description

### CROSS-REFERENCE TO RELATED APPLICATIONS

This application claims priority to Chinese Patent Application No. 202111651813.3, filed with the China National Intellectual Property Administration on December 30, 2021 and entitled "ENERGY STORAGE SYSTEM AND ENERGY STORAGE SYSTEM CONTROL METHOD", which is incorporated herein by reference in its entirety.

### TECHNICAL FIELD

This application relates to the field of energy technologies, and in particular, to an energy storage system and an energy storage system control method.

### BACKGROUND

An energy storage system can store and release electric energy between a power generation side, a grid side, and a user side, and provides functions such as peak shaving and valley filling, peak load and frequency regulation, and cooperating with new energy power generation and grid connection.

To ensure safety of the energy storage system, fault detection needs to be performed in a running process of the energy storage system, and regular safety maintenance needs to be performed for the energy storage system.

At present, in most fault detection manners for the energy storage system, a temperature detector and a smoke detector are disposed in a precast energy storage compartment in which the energy storage system is located. The temperature detector may detect a temperature of the precast energy storage compartment, and the energy storage system is disabled when the temperature of the precast energy storage compartment is greater than a first specified value. The smoke detector may detect whether the precast energy storage compartment is on fire, and the energy storage system is disabled when the smoke detector generates an alarm. When a fault occurs in the energy storage system, the temperature of the precast energy storage compartment increases, or even the precast energy storage compartment catches fire. In actual use, when the temperature detector detects that the temperature of the precast energy storage compartment is greater than the first specified value, and a smoke alarm generates an alarm, the energy storage system is disabled, and a fire extinguisher is controlled to put out fire, to ensure safety of the energy storage system and a device connected to the energy storage system. However, when a fault occurs in a battery in the energy storage system, it takes a corresponding time for a battery temperature to increase. Before the temperature detector detects that the temperature of the precast energy storage compartment is greater than the first specified value, another component connected to the faulty battery may have been damaged due to impact of the faulty battery, or even the energy storage apparatus is completely damaged, causing a serious safety risk and economic loss.

### SUMMARY

This application provides an energy storage system and an energy storage system control method, to isolate a fault source, avoid expansion of a fault range, and improve safety of the energy storage system.

According to a first aspect, this application provides an energy storage system. The energy storage system includes at least one battery rack and a controller.

Each battery rack includes a direct current/direct current converter and a plurality of battery units. The plurality of battery units are connected in series to the direct current/direct current converter, so that the battery rack can obtain charging power or output discharging power by using the direct current/direct current converter. Each battery unit includes a cell and an optimizer, and the optimizer of each battery unit is configured to perform bypass or series connection control on the cell in the same battery unit. The controller is connected to each battery unit, and the controller is configured to: when detecting that a fault occurs in a battery unit, control an optimizer of the faulty battery unit to bypass a cell in the faulty battery unit. The fault includes a fault type that may cause a safety hazard or damage the cell, such as a short circuit of the cell, overcharge of the cell, or overdischarge of the cell. The short circuit of the cell further includes various possible faults of serious short-time increase or temperature increase inside a battery. Although specific names may be different, the faults are all within a range of the short circuit fault of the cell.

In this embodiment of this application, the controller may monitor a running status of each battery unit, and when detecting a faulty battery unit, the controller may control an optimizer in the faulty battery unit to bypass a cell in the faulty battery unit, so that the cell in the faulty battery unit is disconnected from an electric energy transmission path of a battery rack to which the faulty battery unit belongs, thereby isolating a fault source, avoiding expansion of a fault range of the energy storage system, and ensuring safety of the energy storage system.

In a possible implementation, the controller includes a system-level controller.

The system-level controller is specifically configured to: when detecting that a fault occurs in a battery unit, control an optimizer of the faulty battery unit to bypass a cell in the faulty battery unit. With the energy storage system, centralized control may be performed by using the system-level controller.

In a possible implementation, the controller includes at least one rack-level controller. Each rack-level controller corresponds to each battery rack.

Each rack-level controller is connected to battery units in the corresponding battery rack, and is configured to: when detecting that a fault occurs in a battery unit in the corresponding battery rack, control an optimizer of the faulty battery unit to bypass a cell in the faulty battery unit.

With the energy storage system, a single battery rack may be detected and controlled by using a rack-level controller, so that each battery rack works independently without affecting each other. In a possible implementation, the controller includes a system-level controller and a rack-level controller.

The system-level controller is configured to detect a fault state of each battery unit. Each rack-level controller corresponds to each battery rack, and each rack-level controller is connected to battery units in the corresponding battery rack, and is configured to: when determining that a fault occurs in a battery unit in the corresponding battery rack, control an optimizer of the faulty battery unit to bypass a cell in the faulty battery unit.

With the energy storage system, centralized control may be performed by using the system-level controller, and a single battery rack may be controlled by using a rack-level controller.

In a possible implementation, after controlling the optimizer of the faulty battery unit to bypass the cell in the faulty battery unit, the controller is further configured to: control another battery unit to discharge to a safe range, and control a direct current/direct current converter in a battery rack to which the faulty battery unit belongs to be disabled, so that the battery rack to which the faulty battery unit belongs is isolated from another battery rack. The another battery unit is a battery unit, other than the faulty battery unit, in the battery rack to which the faulty battery unit belongs, and the another battery rack is a battery rack in the energy storage system other than the battery rack to which the faulty battery unit belongs.

With the energy storage system, discharge processing may be performed on the another battery unit in the battery rack to which the faulty battery unit belongs, and the direct current/direct current converter in the battery rack is disabled, to implement isolation between battery racks, thereby further improving safety of the energy storage system.

In a possible implementation, the controller is specifically configured to: when the battery rack to which the faulty battery unit belongs is in a discharging state, directly output electric energy of the another battery unit to a target device by using the direct current/direct current converter.

In a possible implementation, the controller is specifically configured to: when the battery rack to which the faulty battery unit belongs is in a charged state or a standby state, adjust the another battery unit to a discharging state, and output electric energy of the another battery unit to a target device by using the direct current/direct current converter.

In a possible implementation, the direct current/direct current converter is configured to convert the charging power into a charging voltage, to charge a connected battery unit; or convert voltages of a plurality of battery units belonging to a same battery rack into the discharging power, and output the discharging power.

With the energy storage system, the direct current/direct current converter may be used to perform voltage regulation processing on electric energy input to the battery rack, and perform voltage regulation processing on electric energy output by the battery rack, to implement voltage adaptation.

According to a second aspect, this application provides an energy storage system control method. The control method may be applied to the energy storage system provided in the first aspect of this application and any possible design. Specifically, the control method may include the following steps: detecting a fault state of each battery unit; and when detecting that a fault occurs in a battery unit, controlling an optimizer of the faulty battery unit to bypass a cell in the faulty battery unit. The fault includes a short circuit, overcharge, or overdischarge of the cell.

With the method, the controller may monitor a running status of each battery unit, and when detecting a faulty battery unit, the controller may control an optimizer in the faulty battery unit to bypass a cell in the faulty battery unit, so that the cell in the faulty battery unit is disconnected from an electric energy transmission path of a battery rack to which the faulty battery unit belongs, thereby isolating a fault source, avoiding expansion of a fault range of the energy storage system, and ensuring safety of the energy storage system.

In a possible implementation, after the controlling an optimizer of the faulty battery unit to bypass a cell in the faulty battery unit, the method further includes: controlling another battery unit to discharge to a safe range, and controlling a direct current/direct current converter in a battery rack to which the faulty battery unit belongs to be disabled, so that the battery rack to which the faulty battery unit belongs is isolated from another battery rack. The another battery unit is a battery unit, other than the faulty battery unit, in the battery rack to which the faulty battery unit belongs, and the another battery rack is a battery rack in the energy storage system other than the battery rack to which the faulty battery unit belongs.

With the method, discharge processing may be performed on the another battery unit in the battery rack to which the faulty battery unit belongs, and the direct current/direct current converter in the battery rack is disabled, to implement isolation between battery racks, thereby further improving safety of the energy storage system.

In a possible implementation, the controlling another battery unit to discharge to a safe range includes: when the battery rack to which the faulty battery unit belongs is in a discharging state, directly outputting electric energy of the another battery unit to a target device by using the direct current/direct current converter, until a state of charge of the another battery unit falls within the safe range.

In a possible implementation, the controlling another battery unit to discharge to a safe range includes: when the battery rack to which the faulty battery unit belongs is in a charged state or a standby state, adjusting the another battery unit to a discharging state, and outputting electric energy of the another battery unit to a target device by using the direct current/direct current converter, until a state of charge of the another battery unit falls within the safe range.

### BRIEF DESCRIPTION OF DRAWINGS

FIG. 1 is a schematic diagram of a structure of a photovoltaic energy storage system according to an embodiment of this application;
FIG. 2 is a schematic diagram of a structure of a precast energy storage compartment according to an embodiment of this application;
FIG. 3 is a schematic diagram of a structure of an energy storage system according to an embodiment of this application;
FIG. 4 is a schematic diagram of a structure of an optimizer according to an embodiment of this application;
FIG. 5 is a schematic flowchart 1 of an energy storage system control method according to an embodiment of this application; and
FIG. 6 is a schematic flowchart 2 of an energy storage system control method according to an embodiment of this application.

### DESCRIPTION OF EMBODIMENTS

The following describes in detail embodiments of this application with reference to accompanying drawings.

A specific operation method in a method embodiment may also be applied to an apparatus embodiment or a system embodiment. It should be noted that in descriptions of this application, "at least one" means one or more, and "a plurality of" means two or more. In view of this, in embodiments of the present invention, "a plurality of" may also be understood as "at least two". The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates that a relationship between associated objects is "OR". In addition, it should be understood that, in descriptions of this application, terms such as "first" and "second" are only used for a purpose of distinguishing descriptions, and cannot be understood as indicating or implying relative importance, or understood as indicating or implying a sequence.

It should be noted that the "connection" in embodiments of this application is an electrical connection or a communication connection. The electrical connection may be a direct or indirect connection between two electrical elements, and the communication connection may be communication between two communication devices. For example, a connection between A and B may represent that A and B are directly connected, or A and B are indirectly connected by using one or more other electrical elements. For example, the connection between A and B may represent that A is directly connected to C, C is directly connected to B, and A and B are connected by using C.

It should be noted that a switch in embodiments of this application may be one or more of a plurality of types of switching components such as a relay, a metal-oxide-semiconductor field-effect transistor (metal-oxide-semiconductor field-effect transistor, MOSFET), a bipolar junction transistor (bipolar junction transistor, BJT), an insulated gate bipolar transistor (insulated gate bipolar transistor, IGBT), a gallium nitride (GaN) field-effect transistor, and a silicon carbide (SiC) power transistor, which are not listed one by one in embodiments of this application. Each switching component may include a first electrode, a second electrode, and a control electrode. The control electrode is configured to control the switching component to be on or off. When the switching component is on, a current may be transmitted between the first electrode and the second electrode of the switching component. When the switching component is off, no current can be transmitted between the first electrode and the second electrode of the switching component. The MOSFET is used as an example. The control electrode of the switching component is a gate, the first electrode of the switching component may be a source of the switching component, and the second electrode may be a drain of the switching component; or the first electrode may be a drain of the switching component, and the second electrode may be a source of the switching component.

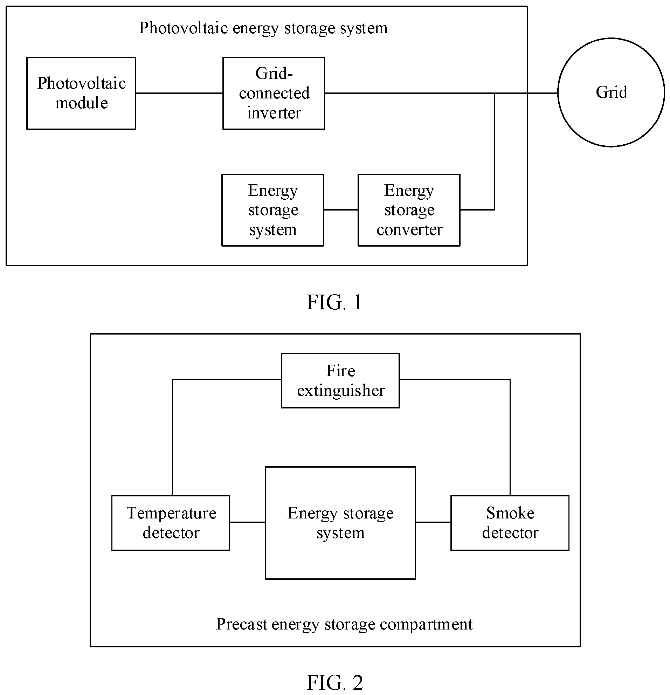

An energy storage system provided in this application may be adapted to different application scenarios, for example, an application scenario of a photovoltaic energy storage system and an application scenario of a power supply system. In this application, the scenario of the photovoltaic energy storage system is used as an example for description. FIG. 1 is a schematic diagram of an application scenario of an energy storage system according to this application.

In the application scenario of the photovoltaic energy storage system, as shown in FIG. 1, the photovoltaic energy storage system may include a photovoltaic module, an energy storage converter, an energy storage system, and a grid-connected inverter. The photovoltaic module may convert light energy into electric energy in a direct current form, and output the electric energy in the direct current form to the grid-connected inverter. The grid-connected inverter may convert the electric energy in the direct current form into electric energy in an alternating current form, and transmit the electric energy in the alternating current form to a grid, to connect the photovoltaic energy storage system to the grid. The energy storage system may store a part of the electric energy output by the photovoltaic inverter when the electric energy generated by the photovoltaic module exceeds an electric energy requirement of the grid, and output stored electric energy to the grid when the electric energy output by the photovoltaic module cannot meet the electric energy requirement of the grid. The energy storage converter may convert a grid voltage into a power supply voltage of the energy storage system, or convert a voltage stored in the energy storage system into a grid voltage, and output the grid voltage to the grid.

In a possible implementation, the energy storage converter may be connected to the photovoltaic module, and when the electric energy generated by the photovoltaic module exceeds the electric energy requirement of the grid, perform voltage conversion on a part of the electric energy generated by the photovoltaic module, and output the electric energy to the energy storage converter for storage; and when the electric energy generated by the photovoltaic module cannot meet the electric energy requirement of the grid, perform voltage conversion on electric energy stored in the energy storage system, and output the electric energy to the grid by using the grid-connected inverter, to meet the electric energy requirement of the grid.

In actual use, as a proportion of electric energy generated by the photovoltaic energy storage system in electric energy transmitted in the grid grows, a quantity of battery modules in the energy storage system gradually increases, and output power of the energy storage system also gradually increases. Once a fault occurs in the energy storage system, efficiency of the photovoltaic energy storage system is directly affected, or even the entire photovoltaic energy storage system cannot run. Therefore, safety of the energy storage system needs to be relatively high. To improve the safety of the energy storage system, fault detection needs to be performed in a running process of the energy storage system, and regular safety maintenance needs to be performed for the energy storage system. The fault includes a fault type that may cause a safety hazard or damage a cell, such as a short circuit of the cell, overcharge of the cell, or overdischarge of the cell. The short circuit of the cell further includes various possible faults of serious short-time increase or temperature increase inside a battery. Although specific names may be different, the faults are all within a range of the short circuit fault of the cell.

FIG. 2 is a schematic diagram of fault detection of an energy storage system. Refer to FIG. 2. The energy storage system may be disposed in a precast energy storage compartment, and a temperature detector, a smoke detector, and a fire extinguisher are disposed at a plurality of positions in the precast energy storage compartment.

Specifically, both the temperature detector and the smoke detector are connected to the fire extinguisher. The temperature detector has a specific temperature detection range in the precast energy storage compartment, and the temperature detector can detect a temperature within the temperature detection range. The smoke detector can detect whether the precast energy storage compartment is on fire. The fire extinguisher can put out fire when the precast energy storage compartment is on fire.

Specifically, when a fault occurs in a battery in the energy storage system, a large amount of heat is generated in the battery, causing thermal runaway of the energy storage system. As time moves, the heat generated in the battery causes a surrounding temperature to increase, or even causes fire. When the temperature detector detects that the temperature within the temperature detection range reaches a first specified value and the smoke detector detects that the precast energy storage compartment is on fire, the energy storage system is controlled to be disabled, and the fire extinguisher is controlled to put out fire for the precast energy storage compartment, to ensure safety of the energy storage system and normal running of another device connected to the energy storage system. It should be noted that only one temperature detector is shown in this embodiment of this application, but a quantity of temperature detectors in this embodiment of this application is not limited thereto.

In actual use, before the faulty battery causes the surrounding temperature to reach the first specified value, a plurality of components connected to the faulty battery may have been damaged. As a result, a fault range of the energy storage system is expanded, or even the entire energy storage system is faulty, leading to a serious safety risk and causing a serious economic loss.

To resolve the foregoing problem, embodiments of this application provide an energy storage system and an energy storage system control method, to isolate a fault source, avoid expansion of a fault range, and improve safety of the energy storage system.

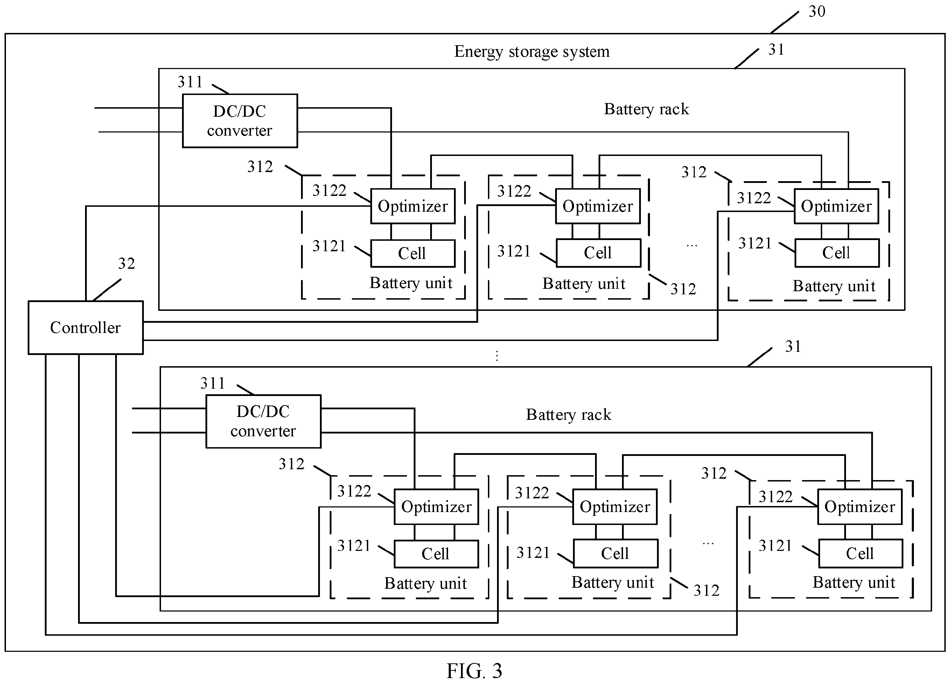

FIG. 3 shows an energy storage system according to an embodiment of this application. As shown in FIG. 3, the energy storage system 30 includes at least one battery rack 31 and a controller 32.

Each battery rack 31 includes a direct current/direct current (Direct Current/Direct Current, DC/DC) converter 311 and a plurality of battery units 312. The plurality of battery units 312 are connected in series to the DC/DC converter 311, so that the battery rack 31 can obtain charging power or output discharging power by using the DC/DC converter 311.

Specifically, each battery unit 312 includes a cell 3121 and an optimizer 3122, and the optimizer 3122 of each battery unit 312 is configured to perform bypass or series connection control on the cell 3121 that belongs to the same battery unit 312.

The controller 32 is connected to each battery unit 312. The controller 32 is configured to: when detecting that a fault occurs in a battery unit 312, control an optimizer 3122 of the faulty battery unit to bypass a cell 3121 in the faulty battery unit.

In an actual use process, there are a plurality of causes for a short circuit of a cell, for example, an external high temperature, and manufacturing of the cell, which are not described herein one by one in this application.

In this application, the energy storage system 30 may further include an input/output end, and the input/output end of the energy storage system 30 may be connected to a power supply and/or a load. When the input/output end of the energy storage system 30 is connected to a power supply, the energy storage system 30 is in a charged state, and the energy storage system 30 may receive, by using the input/output end, electric energy output by the power supply and store the electric energy. When the input/output end of the energy storage system 30 is connected to a load or a grid, the energy storage system 30 is in a discharging state, and the energy storage system 30 may output stored electric energy to the load or the grid by using the input/output end, to supply power to the load or the grid. When the energy storage system 30 does not store electric energy output by the power supply, nor outputs stored electric energy to the load or the grid, the energy storage system 30 is in a standby state.

In actual use, the energy storage system 30 further includes a direct current bus, and each battery rack 31 in the energy storage system 30 may be connected to the input/output end by using the direct current bus, that is, a plurality of battery racks 31 are connected in parallel.

Specifically, when the energy storage system 30 is in the charged state, some or all battery racks 31 in the energy storage system 30 work in the charged state. Similarly, when the energy storage system 30 is in the discharging state, some or all battery racks 31 in the energy storage system 30 work in the discharging state. The controller 32 may control the battery rack 31 to switch between the charged state, the discharging state, or the standby state, and control charging power at which each battery rack 31 works in the charged state, or discharging power at which each battery rack 31 works in the discharging state.

In an actual application, the energy storage system 30 may be fixedly connected to the power supply and the load. In another implementation, the energy storage system 30 may be disposed in a flexible detachable form. For example, a fixed interface is disposed on the energy storage system 30, the power supply may be connected to the energy storage system 30 by using the fixed interface, and the load may also be connected to the energy storage system 30 by using the fixed interface. In this case, the energy storage system 30 is an apparatus independent of the power supply and the load.

With the energy storage system 30 provided in this embodiment of this application, the optimizer 3122 in each battery unit 312 may implement bypass and series connection control on the cell 3121. The controller 32 may perform fault detection on the battery unit 312 in each battery rack 31. When the controller 32 detects a faulty battery unit 312, the controller 32 generates a fault alarm, and controls an optimizer 3122 in the battery unit 312 to bypass a cell 3121 in the faulty battery unit 312, to isolate the faulty battery unit 312 from an electric energy transmission path before the faulty battery unit 312 causes thermal runaway, avoid expansion of a fault range, and ensure safety of the energy storage system 30.

It should be understood that, after the cell 3121 in the faulty battery unit 312 is bypassed by the optimizer 3122, the cell 3121 in the faulty battery unit 312 cannot receive electric energy from the electric energy transmission path or output stored electric energy. In this way, an electrical connection between the faulty cell 3121 and another battery unit 312 is broken, a fault source is isolated, and damage to the another battery unit 312 in a battery rack 31 to which the faulty battery unit 312 belongs is avoided. Further, a quantity of faulty components in the energy storage system 30 is reduced, and maintenance costs of the energy storage system 30 are reduced. The another battery unit 312 is a battery unit 312 other than the faulty battery unit 312 in the battery rack 31 to which the faulty battery unit 312 belongs.

The following describes in detail the battery rack 31 and the controller 32 in the energy storage system 30.

### 1. Battery rack 31

Each battery rack 31 includes a DC/DC converter 311 and a plurality of battery units 312 connected in series.

The DC/DC converter 311 is configured to charge the plurality of battery units 312 connected in series, and output electric energy stored in the plurality of battery units 312 connected in series. A first end of the DC/DC converter 311 may be connected to the direct current bus, and a second end of the DC/DC converter 311 is connected to the plurality of battery units 312 connected in series, so that the battery rack 31 can obtain charging power or output discharging power by using the DC/DC converter 311.

Specifically, when the battery rack 31 obtains charging power, the first end of the DC/DC converter 311 is an input end, the second end of the DC/DC converter 311 is an output end, and the DC/DC converter 311 obtains charging power from the direct current bus by using the first end, converts the obtained charging power into a charging voltage, and charges, by using the second end, the plurality of battery units 312 connected in series in the battery rack 31. When the battery rack 31 outputs discharging power, the first end of the DC/DC converter 311 is an output end, the second end of the DC/DC converter 311 is an input end, and the DC/DC converter 311 converts, by using the second end, a voltage from the plurality of battery units 312 connected in series into discharging power, and outputs the discharging power to the direct current bus by using the second end.

In actual use, a voltage of the direct current bus may be different from a voltage between the plurality of battery units 312 connected in series. Therefore, the voltage on the direct current bus cannot directly charge cells 3121 in the battery units 312 connected in series. Therefore, the DC/DC converter 311 may perform voltage regulation processing on the voltage that is input by the direct current bus to the battery rack 31, and perform voltage regulation processing on the voltage that is output to the direct current bus by the plurality of battery units 312 connected in series in the battery rack 31, to implement voltage matching between the battery rack 31 and the direct current bus.

The plurality of battery units 312 connected in series are components that store electric energy in the battery rack 31. The plurality of battery units 312 connected in series are connected to the DC/DC converter 311, so that the battery rack 31 can obtain the charging power or output the discharging power by using the DC/DC converter 311.

In actual use, after the plurality of battery units 312 connected in series receive the charging voltage output by the connected DC/DC converter 311, the plurality of battery units 312 connected in series perform voltage division processing on the charging voltage, to obtain a plurality of charging sub-voltages. Each battery unit 312 receives one charging sub-voltage, and stores electric energy carried in the charging sub-voltage. In this way, the battery units 312 are charged. Similarly, when the battery rack 31 outputs the discharging power, each battery unit 312 outputs one discharging sub-voltage, and a plurality of discharging sub-voltages are added up to form a discharging voltage, which is converted into the discharging power by the DC/DC converter 311 and then output to the direct current bus.

Specifically, each battery unit 312 may include a cell 3121 and an optimizer 3122.

Specifically, the optimizer 3122 of each battery unit 312 is configured to perform bypass or series connection control on the cell 3121 that belong to the same battery unit 312.

Specifically, when the optimizer 3122 performs series connection control on the cell 3121 that belongs to the same battery unit 312, the cell 3121 that belongs to the same battery unit 312 may receive charging power output by the DC/DC converter 311, or output stored electric energy by using the DC/DC converter 311. When the optimizer 3122 performs bypass control on the cell 3121 that belongs to the same battery unit 312, the cell 3121 that belongs to the same battery unit 312 is disconnected from another battery unit 312 and the DC/DC converter 311. The another battery unit is a battery unit 312 other than the battery unit in the same battery rack 31 to which the battery unit belongs.

Specifically, the optimizer 3122 in each battery unit 312 is connected to the controller 32. When detecting that a fault occurs in a battery unit 312, the controller 32 may send a control signal to an optimizer 3122 in the faulty battery unit 312. The control signal may control the optimizer 3122 to bypass a cell 3121 in the faulty battery unit 312.

In actual use, the optimizer 3122 may be a switch circuit, and the control signal used to control the optimizer 3122 to perform bypass control on the cell 3121 is a drive signal of the switch circuit. A first end of the optimizer 3122 is connected in series to the another battery unit 312, and a second end of the optimizer 3122 is connected to the cell 3121 that belongs to the same battery unit 312. A first endpoint of a first end of the switch circuit is an end at which the battery unit 312 receives a high level, a second endpoint of the first end of the switch circuit is an end at which the battery unit 312 receives a low level, a first endpoint of a second end of the switch circuit is connected to a positive electrode of the cell 3121, and a second endpoint of the second end of the switch circuit is connected to a negative electrode of the cell 3121.

Specifically, when the switch circuit does not receive the control signal, the first endpoint of the first end of the switch circuit is connected to the first endpoint of the second end, and the second endpoint of the first end of the switch circuit is connected to the second endpoint of the second end. In this case, the cell 3121 is connected in series to the another battery unit 312. When the switch circuit receives the control signal, the first endpoint of the first end of the switch circuit is connected to the second endpoint of the first end, so that the cell 3121 is isolated from an electric energy transmission path formed by the plurality of battery units 312 connected in series. During specific implementation, a switch is connected between the first endpoint of the first end of the switch circuit and the first endpoint of the second end, and a switch is connected between the first endpoint of the first end of the switch circuit and the second endpoint of the first end. The controller 32 may control, by sending a corresponding drive signal to a switch in the switch circuit, the optimizer 3122 to perform bypass or series connection control on the cell 3121.

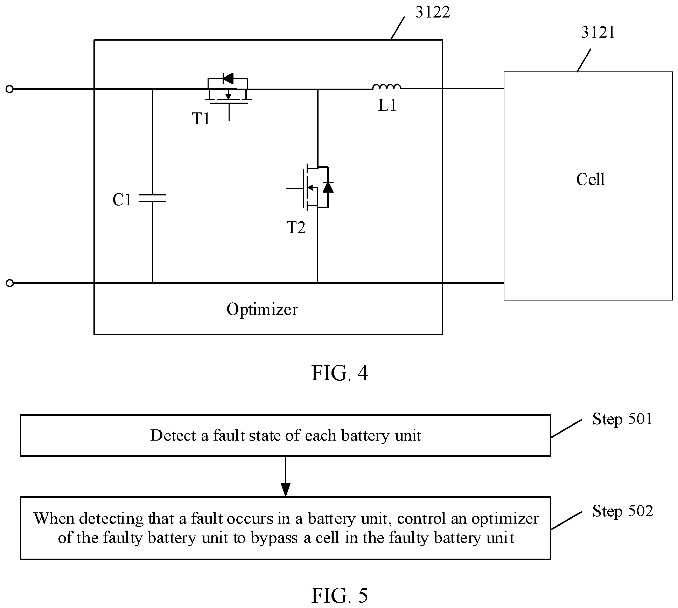

Optionally, the optimizer 3122 is a buck switch circuit shown in FIG. 4, and the control signal sent by the controller 32 is a high-level drive signal.

Specifically, a switch T1 may be in a long-term on state. When the controller 32 sends a low-level drive signal to a switch T2, the switch T2 is off, and an electric energy transmission path is formed between the first end of the optimizer 3122 and the cell 3121. In this case, the cell 3121 may be connected in series to the another battery unit 312 by using the first end of the optimizer 3122. In this way, series connection control is implemented on the cell 3121. When the controller 32 sends a high-level drive signal to the switch T2, the switch T2 is on, and when electric energy is transmitted on the electric energy transmission path formed by the plurality of battery units 312 connected in series, the transmitted electric energy directly returns to the electric energy transmission path through the switch T2 without passing through the cell 3121. Therefore, the cell 3121 is bypassed. In this case, the cell 3121 is disconnected from the another battery unit 312. In this way, bypass control is implemented on the cell 3121.

It should be understood that the foregoing description about the structure of the optimizer 3122 is merely an example. In actual use, the optimizer 3122 may alternatively use another circuit structure. For example, the optimizer 3122 may be a boost switch circuit or a buck-boost switch circuit, and the optimizer 3122 is controlled, by controlling a drive signal of a switch in the circuit, to perform bypass or series connection control on the cell 3121.

### 2. Controller 32

The controller 32 is connected to battery units 312 in each battery rack 31. The controller 32 may perform fault detection on each battery unit 312, and when detecting that a fault occurs in a battery unit 312, generate a fault alarm, and control an optimizer 3122 of the faulty battery unit 312 to bypass a cell 3121 in the faulty battery unit 312.

Specifically, the controller 32 determines, based on a current running status of the energy storage system 30, a standard value of a running parameter of the battery unit 312 in the current running status, compares the standard value of the running parameter with an actual running parameter of the battery unit 312, and when a difference between the running parameter of the battery unit 312 and the calculated standard value of the running parameter is greater than or equal to a specified value, determines that the battery unit 312 runs abnormally, and uses the battery unit 312 running abnormally as a faulty battery unit 312. The specified value may be 2% of the standard value of the running parameter.

Optionally, if the energy storage system 30 is currently in the charged state, a standard charging current curve and/or a standard charging voltage curve of each battery unit 312 may be determined based on the charging power. When it is determined that a current curve in the running parameter of the battery unit 312 does not match the standard charging current curve, or a voltage curve in the running parameter of the battery unit 312 does not match the standard charging voltage curve, it may be determined that the battery unit 312 runs abnormally and a fault occurs.

In actual use, due to problems of detection precision of the controller 32 and a value fluctuation of transmitted electric energy, to avoid a detection error, after determining that the battery unit 312 runs abnormally, the controller 32 records a duration in which the battery unit 312 runs abnormally, and when determining that the duration in which the battery unit 312 runs abnormally reaches a preset duration range, determines that a fault occurs in the battery unit 312. The preset duration range may be set based on a requirement for safe running of the energy storage system 30. For example, the preset duration range may be 1 to 3 seconds.

In this application, after determining that a fault occurs in a battery unit 312, the controller 32 sends a control signal to an optimizer 3122 in the faulty battery unit 312, to control the optimizer 3122 to perform bypass control on a cell 3121 in the faulty battery unit 312.

In a possible implementation, the controller 32 includes a system-level controller.

Specifically, the system-level controller is connected to each battery unit 312. The system-level controller is configured to perform fault detection on each battery unit 312, and when detecting that a fault occurs in a battery unit 312, control an optimizer 3122 of the faulty battery unit 312 to bypass a cell 3121 in the faulty battery unit 312. Optionally, the system-level controller may be a battery management system (battery management system, BMS).

In a possible implementation, the controller 32 includes at least one rack-level controller. Each rack-level controller corresponds to each battery rack 31. Each rack-level controller is connected to battery units 312 in the corresponding battery rack 31.

Specifically, each rack-level controller is configured to detect a fault state of each battery unit 312 in the corresponding battery rack 31, and when detecting that a fault occurs in a battery unit 312 in the corresponding battery rack 31, control an optimizer 3122 of the faulty battery unit 312 to bypass a cell 3121 in the faulty battery unit 312.

In a possible implementation, the controller 32 includes a system-level controller and a rack-level controller. The system-level controller may be connected to each battery rack 31, and detect a fault state of a battery unit 312 in each battery rack 31.

Each rack-level controller corresponds to each battery rack 31, and each rack-level controller is connected to the system-level controller and battery units 312 in the corresponding battery rack 31, and is configured to: when determining that a fault occurs in a battery unit 312 in the corresponding battery rack 31, control an optimizer 3122 of the faulty battery unit 312 to bypass a cell 3121 in the faulty battery unit 312.

It should be noted that, after the cell 3121 in the faulty battery unit 312 is bypassed by the optimizer 3122, the cell 3121 in the faulty battery unit 312 may be isolated from an electric energy transmission path formed by a plurality of battery units 312 connected in series. To prevent a chemical reaction generated by the cell 3121 in the faulty battery unit from damaging another connected battery unit 312, for example, the cell 3121 in the faulty battery unit 312 is shortcircuited and breaks down a switch in the optimizer 3122, so that the cell 3121 in the faulty battery unit 312 is reconnected to the electric energy transmission path, after controlling the optimizer 3122 of the faulty battery unit 312 to bypass the cell 3121 in the faulty battery unit 312, the controller 32 may further control the another battery unit 312 to discharge to a safe range, and control a DC/DC converter 311 in a battery rack 31 to which the faulty battery unit 312 belongs to be disabled, so that the battery rack 31 to which the faulty battery unit 312 belongs is isolated from another battery rack 31. The another battery unit 312 is a battery unit 312 other than the faulty battery unit 312 in the battery rack 31 to which the faulty battery unit 312 belongs. The another battery rack 31 is a battery rack 31 other than the battery rack 31 to which the faulty battery unit 312 belongs in the energy storage system 30.

Optionally, the controller 32 sets discharging power of the battery rack 31 to which the faulty battery unit 312 belongs to maximum discharging power, to accelerate a speed at which the another battery unit 312 enters the safe range.

It should be understood that when the another battery unit 312 discharges to the safe range, the another battery unit 312 is in a low-electric-energy state, to ensure maximum safety of the energy storage system 30.

Optionally, to improve a safety degree of the energy storage system 30, the safe range may be zero to 10% of a storage capacity of the battery unit 312.

In actual use, before controlling the another battery unit 312 in the battery rack 31 to which the faulty battery unit 312 belongs to discharge to the safe range, the controller 32 needs to first determine a running status of the battery rack 31, and control, based on a current running status of the battery rack 31, a manner for discharging electric energy stored in the another battery unit 312. In a possible implementation, when the battery rack 31 to which the faulty battery unit 312 belongs is in the discharging state, the electric energy of the another battery unit 312 is directly output to a target device by using the DC/DC converter 311, until a state of charge of the another battery unit 312 is within the safe range. The target device may be any one of the following: a grid, a power-consuming device, or another battery rack in the energy storage system.

In a possible implementation, when the battery rack to which the faulty battery unit belongs is in the charged state or the standby state, the another battery unit 312 is adjusted to the discharging state, and the electric energy of the another battery unit 312 is output to the target device by using the DC/DC converter 311, until a state of charge of the another battery unit 312 is within the safe range.

In actual use, the optimizer 3122 may be a switch circuit including a component such as a switching transistor, a diode, an inductor, or a capacitor. A working state of the optimizer 3122 may be implemented by adjusting a working state of the component (for example, the switching transistor).

In this application, the working state of the component may be adjusted by using the controller 32. In actual use, the controller 32 may be connected to a control electrode of a switch in the connected optimizer 3122, and control an on moment and an on duration of the switching transistor by providing a drive signal for the switch in the optimizer 3122, to adjust a working state of the optimizer 3122, and control the optimizer 3122 to perform bypass or series connection control on a cell 3121 that belong to a same battery unit 312.

Specifically, if the switching transistor of the optimizer 3122 is a MOS transistor, the controller 32 may be connected to a gate of the MOS transistor, so that the optimizer 3122 is controlled, by controlling the MOS transistor to be on or off, to perform bypass or series connection control on the cell 3121 that belongs to the same battery unit 312. If the switch in the optimizer 3122 is a BJT, the controller 32 may be connected to a base of the BJT, so that the optimizer 3122 is controlled, by controlling the BJT to be on or off, to perform bypass or series connection control on the cell 3121 that belong to the same battery unit 312.

During specific implementation, the controller 32 may be any one of a micro control unit (micro controller unit, MCU), a central processing unit (central processing unit, CPU), a field programmable gate array (field programmable gate array, FPGA), or a digital signal processor (digital signal processor, DSP). Certainly, a specific form of the controller 32 is not limited to the foregoing examples.

Based on the energy storage system 30 provided in embodiments of this application, this application further provides an energy storage system control method, which may be performed by the controller 32 in the energy storage system 30. According to the energy storage system control method provided in embodiments of this application, fault detection may be performed on battery units in a running process of the energy storage system, and a fault source is isolated, to avoid expansion of a fault range, and ensure safety of the energy storage system. As shown in FIG. 5, the energy storage system control method may include the following steps.

Step 501: Detect a fault state of each battery unit.

In actual use, the controller may monitor a running parameter of each battery unit by using a running parameter of each battery unit, and perform fault diagnosis by using the running parameter of each battery unit. The running parameter may be an electrical parameter in a running process of the battery unit. For example, the running parameter may include one or more of the following: a voltage value, a current value, and a power value.

Specifically, for a process in which the controller determines a fault state of the battery unit by using the running parameter, refer to the foregoing description of the controller. Details are not described herein again in this application.

Step 502: When detecting that a fault occurs in a battery unit, control an optimizer of the faulty battery unit to bypass a cell in the faulty battery unit. Specifically, when detecting that a fault occurs in a battery unit, the controller sends a fault alarm, and sends a control signal to an optimizer in the faulty battery unit, to control the optimizer to perform bypass control on a cell in the faulty battery unit. When the cell in the faulty battery unit is bypassed, the cell in the faulty battery unit is isolated from an electric energy transmission path in a battery rack, thereby isolating a fault source.

In a possible implementation, after the controlling an optimizer of the faulty battery unit to bypass a cell in the faulty battery unit, the method further includes: controlling another battery unit to discharge to a safe range, and controlling a direct current/direct current converter in a battery rack to which the faulty battery unit belongs to be disabled, so that the battery rack to which the faulty battery unit belongs is isolated from another battery rack. The another battery unit is a battery unit, other than the faulty battery unit, in the battery rack to which the faulty battery unit belongs, and the another battery rack is a battery rack in the energy storage system other than the battery rack to which the faulty battery unit belongs.

In a possible implementation, the controlling another battery unit to discharge to a safe range includes: when the battery rack to which the faulty battery unit belongs is in a discharging state, directly outputting electric energy of the another battery unit to a target device by using the direct current/direct current converter, until a state of charge of the another battery unit falls within the safe range.

In a possible implementation, the controlling another battery unit to discharge to a safe range includes: when the battery rack to which the faulty battery unit belongs is in a charged state or a standby state, adjusting the another battery unit to a discharging state, and outputting electric energy of the another battery unit to a target device by using the direct current/direct current converter, until a state of charge of the another battery unit falls within the safe range.

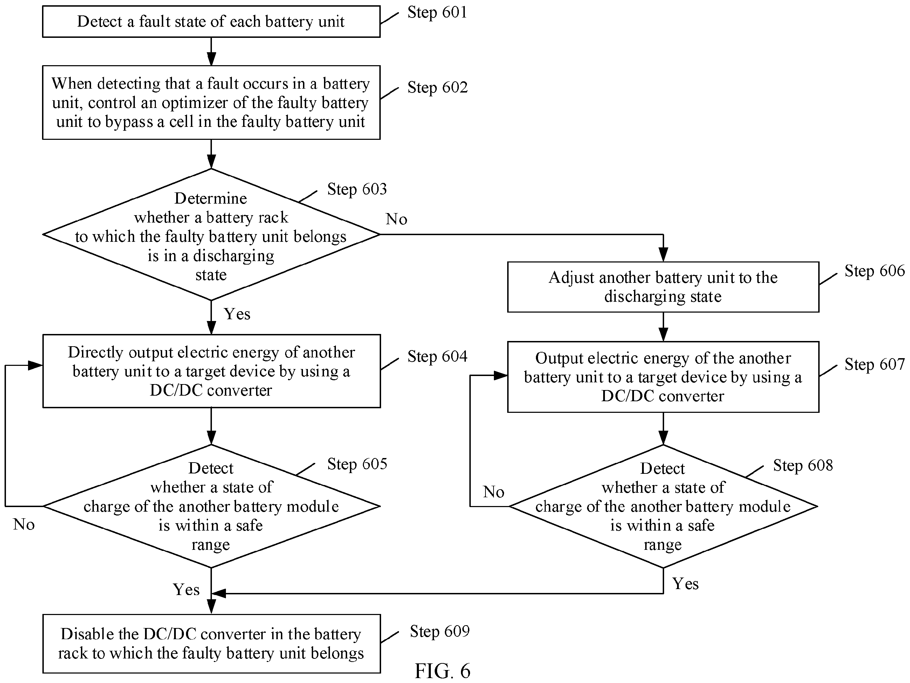

With reference to the foregoing description, FIG. 6 shows an example of an energy storage system control method. The control method may be performed by a controller, and the control method specifically includes the following steps.

Step 601: Detect a fault state of each battery unit, and perform step 602.

Step 602: When detecting that a fault occurs in a battery unit, control an optimizer of the faulty battery unit to bypass a cell in the faulty battery unit, and perform step 603.

Step 603: Determine whether a battery rack to which the faulty battery unit belongs is in a discharging state, and if the battery rack is in the discharging state, perform step 604; otherwise, perform step 606.

Step 604: Directly output electric energy of another battery unit to a target device by using a DC/DC converter, and perform step 605. The another battery unit is a battery unit, other than the faulty battery unit, in the battery rack to which the faulty battery unit belongs.

Step 605: Detect whether a state of charge of the another battery module is within a safe range, and if the state of charge is within the safe range, perform step 609; otherwise, return to step 604. Step 606: Adjust the another battery unit to the discharging state, and perform step 607.

Step 607: Output electric energy of the another battery unit to a target device by using a DC/DC converter, and perform step 608.

Step 608: Detect whether a state of charge of the another battery unit is within a safe range, and if the state of charge is within the safe range, perform step 609; otherwise, return to step 607.

Step 609: Disable the DC/DC converter in the battery rack to which the faulty battery unit belongs. In a possible implementation, when detecting that a fault occurs in a battery unit, the controller first determines whether a battery rack to which the faulty battery unit belongs is in the discharging state, and then controls an optimizer of the faulty battery unit to bypass a cell in the faulty battery unit.

Based on the foregoing embodiment, an embodiment of this application further provides a computer-readable storage medium. The computer-readable storage medium stores a computer program, and when the computer program is executed by a computer, the computer is enabled to perform the energy storage system control method provided in the foregoing embodiment.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. An energy storage system, comprising at least one battery rack and a controller, wherein
each battery rack comprises a direct current/direct current converter and a plurality of battery units;
the plurality of battery units are connected in series to the direct current/direct current converter, so that the battery rack can obtain charging power or output discharging power by using the direct current/direct current converter;
each battery unit comprises a cell and an optimizer, and the optimizer of each battery unit is configured to perform bypass or series connection control on the cell in the same battery unit; and
the controller is connected to each battery unit, and the controller is configured to: when detecting that a fault occurs in a battery unit, control an optimizer of the faulty battery unit to bypass a cell in the faulty battery unit, wherein the fault comprises a short circuit, overdischarge, or overcharge of the cell.

2. The energy storage system according to claim 1, wherein the controller comprises a system-level controller; and
the system-level controller is specifically configured to: when detecting that a fault occurs in a battery unit, control an optimizer of the faulty battery unit to bypass a cell in the faulty battery unit.

3. The energy storage system according to claim 1, wherein the controller comprises at least one rack-level controller;
each rack-level controller corresponds to each battery rack; and
each rack-level controller is connected to battery units in the corresponding battery rack, and is configured to: when detecting that a fault occurs in a battery unit in the corresponding battery rack, control an optimizer of the faulty battery unit to bypass a cell in the faulty battery unit.

4. The energy storage system according to claim 1, wherein the controller comprises a system-level controller and a rack-level controller;
the system-level controller is configured to detect a fault state of each battery unit; and
each rack-level controller corresponds to each battery rack, and each rack-level controller is connected to battery units in the corresponding battery rack, and is configured to: when determining that a fault occurs in a battery unit in the corresponding battery rack, control an optimizer of the faulty battery unit to bypass a cell in the faulty battery unit.

5. The energy storage system according to any one of claims 1 to 4, wherein after controlling the optimizer of the faulty battery unit to bypass the cell in the faulty battery unit, the controller is further configured to: control another battery unit to discharge to a safe range, and control a direct current/direct current converter in a battery rack to which the faulty battery unit belongs to be disabled, so that the battery rack to which the faulty battery unit belongs is isolated from another battery rack, wherein the another battery unit is a battery unit, other than the faulty battery unit, in the battery rack to which the faulty battery unit belongs, and the another battery rack is a battery rack in the energy storage system other than the battery rack to which the faulty battery unit belongs.

6. The energy storage system according to claim 5, wherein the controller is specifically configured to: when the battery rack to which the faulty battery unit belongs is in a discharging state, directly output electric energy of the another battery unit to a target device by using the direct current/direct current converter.

7. The energy storage system according to claim 5, wherein the controller is specifically configured to: when the battery rack to which the faulty battery unit belongs is in a charged state or a standby state, adjust the another battery unit to a discharging state, and output electric energy of the another battery unit to a target device by using the direct current/direct current converter.

8. The energy storage system according to any one of claims 1 to 7, wherein the direct current/direct current converter is configured to convert the charging power into a charging voltage, to charge a connected battery unit; or convert voltages of a plurality of battery units belonging to a same battery rack into the discharging power, and output the discharging power.

9. An energy storage system control method, applied to the energy storage system according to any one of claims 1 to 8, wherein the control method comprises:
detecting a fault state of each battery unit; and
when detecting that a fault occurs in a battery unit, controlling an optimizer of the faulty battery unit to bypass a cell in the faulty battery unit, wherein the fault comprises a short circuit, overcharge, or overdischarge of the cell.

10. The method according to claim 9, wherein after the controlling an optimizer of the faulty battery unit to bypass a cell in the faulty battery unit, the method further comprises: controlling another battery unit to discharge to a safe range, and controlling a direct current/direct current converter in a battery rack to which the faulty battery unit belongs to be disabled, so that the battery rack to which the faulty battery unit belongs is isolated from another battery rack, wherein the another battery unit is a battery unit, other than the faulty battery unit, in the battery rack to which the faulty battery unit belongs, and the another battery rack is a battery rack in the energy storage system other than the battery rack to which the faulty battery unit belongs.

11. The method according to claim 10, wherein the controlling another battery unit to discharge to a safe range comprises:
when the battery rack to which the faulty battery unit belongs is in a discharging state, directly outputting electric energy of the another battery unit to a target device by using the direct current/direct current converter, until a state of charge of the another battery unit falls within the safe range.

12. The method according to claim 10, wherein the controlling another battery unit to discharge to a safe range comprises:
when the battery rack to which the faulty battery unit belongs is in a charged state or a standby state, adjusting the another battery unit to a discharging state, and outputting electric energy of the another battery unit to a target device by using the direct current/direct current converter, until a state of charge of the another battery unit falls within the safe range.
